# EUROPÄISCHE PATENTSCHRIFT

(11) **EP 2 942 235 B1**
(45) Veröffentlichungstag und Bekanntmachung des Hinweises auf die Patenterteilung: **13.12.2017**
(21) Anmeldenummer: 15165882.0
(22) Anmeldetag: 30.04.2015
(51) Int. Cl.: B60R 1/06, F16C 11/00

(54) **LAGERANORDNUNG ZUR SCHWENKBAREN LAGERUNG EINES INDIREKTEN SICHTSYSTEMS, SOWIE INDIREKTES SICHTSYSTEM HIERMIT**
BEARING ASSEMBLY FOR PIVOTABLE MOUNTING OF AN INDIRECT VISION SYSTEM, AND INDIRECT VISION SYSTEM USING THE SAME
SYSTÈME D'ORIENTATION DESTINÉ À L'INCLINAISON D'UN SYSTÈME DE VISION INDIRECT ET SYSTÈME DE VISION INDIRECT ASSOCIÉ

(30) Priorität: 08.05.2014 DE 102014208688
(43) Veröffentlichungstag der Anmeldung: 11.11.2015
(73) Patentinhaber: MEKRA LANG GmbH & Co. KG, 91465 Ergersheim (DE)
(72) Erfinder: Lang, Werner Dr., 91465 Ergersheim (DE); Heger, Sebastian, 91478 Markt Nordheim (DE)
(74) Vertreter: Winter, Brandl, Fürniss, Hübner, Röss, Kaiser, Polte - Partnerschaft mbB

(56) Entgegenhaltungen:
- DE-A1- 4 126 523
- US-A- 4 166 651

## Beschreibung

Die Erfindung betrifft eine Lageranordnung zur schwenkbaren Lagerung eines indirekten Sichtsystems, beispielsweise in Form wenigstens eines Rückspiegels, insbesondere eines Außenrückspiegels an einem Kraftfahrzeug, sowie ein indirektes Sichtsystem mit wenigstens einer derartigen Lageranordnung.

Es ist allgemein bekannt, indirekte Sichtsysteme, also insbesondere, jedoch nicht ausschließlich Außenrückspiegel an einem Kraftfahrzeug, insbesondere einem Nutzfahrzeug, schwenkbar anzubringen, um das (indirekte) Sichtsystem bei Bedarf aus einer Nutz- oder Betriebsposition in eine abgeklappte Position schwenken zu können, in welcher das indirekte Sichtsystem zumindest annähernd parallel entlang der Fahrzeugkarosserie zu liegen kommt. Eine derartige Verschwenkung des Sichtsystems erfolgt entweder bewusst oder absichtlich, beispielsweise um die Durchfahrtsbreite des Fahrzeugs zu verringern oder sie erfolgt quasi selbständig oder automatisch, wenn das Sichtsystem an einem Hindernis anstößt.

Zur schwenkbaren Lagerung von z.B. Außenrückspiegeln an Kraftfahrzeugen bzw. Fahrzeugkarosserieteilen schlägt der Stand der Technik eine Vielzahl von Konstruktionen vor, die sich teilweise erheblich voneinander unterscheiden. Ein allgemein bekannter Konstruktionsansatz ist, einen den eigentlichen Rückspiegel oder Spiegelkopf tragenden Spiegelarm oder allgemein Tragarm in Form eines Rohrs auszubilden, welches in einer entsprechenden Haltemuffe oder Haltehülse seitens des Fahrzeugs aufgenommen und hierin verschwenkbar ist. Ein Beispiel einer derartigen Konstruktion findet sich in der US 5,025,543 A1.

Aus der US 4,166,651 A1, die eine Lageranordnung gemäß dem Oberbegriff des Anspruchs 1 offenbart, ist es bekannt, einen Außenspiegel an einem rohrförmigen Tragarm um die Längsachse des Tragarms verstellbar anzuordnen, indem seitens des Spiegelgehäuses bzw. einer Spiegelträgerplatte Befestigungsschellen vorgesehen sind, welche den Tragarm unter Aufbringung einer elastischen Spannkraft abschnittsweise umgreifen.

Die DE 41 26 523 A1 schlägt vor, eine Spiegelhalterung gegenüber einem karosseriefesten Haltebock mittels einer koaxial zu einer Schwenkachse angeordneten und in deren Axialrichtung wirkenden Druckfeder derart zu verspannen, dass zwischen Spiegelhalterung und Haltebock ein ständiges Reibmoment erzeugt wird. Zusätzlich drückt die Feder gegen eine Rastverbindung, so dass zur Lösung der Rastverbindung die Federkraft überwunden werden muss.

Die GB 658,679 A1 zeigt einen Fahrzeugaußenrückspiegel bzw. eine Lageranordnung hierfür, bei dem bzw. der ein U-förmiger Haltebock an dem Fahrzeugkarosserieteil festgelegt wird. Zwischen den beiden freien Schenkeln des U erstreckt sich ein Stift, auf dessen Außenumfang eine Schraubendruckfeder gesetzt ist. Eine rohrförmige Hülse umgreift die Schraubendruckfeder und verläuft zwischen den beiden Schenkeln des U-Profils und ist hierbei im Bereich der beiden Schenkel gegenüber dem zentralen Stift schwenkbeweglich gelagert. An der Hülse wiederum ist ein Spiegelarm befestigt. An einem Ende der Hülse ist darüber hinaus ein Verrastungsmechanismus vorgesehen, der durch die Schraubendruckfeder belastet ist und eine Verrastungs- oder Haltekraft auf die Hülse ausübt, sodass der Haltearm und damit der Spiegel im ausgeklappten Zustand gehalten wird. Wirkt eine entsprechende Kraft auf den Spiegel oder den Spiegelarm, wird die Haltekraft des Verrastungsmechanismus überwunden und der Spiegel kann in einer Ausweichbewegung einklappen.

Eine weitere Lageranordnung ist aus der der DE 10 2009 013 645 B3 bekannt geworden. Hierin wird eine Spiegelhalterung oder Lageranordnung mit einem ersten und einem zweiten Verbindungs- oder Lagerteil beschrieben, die um eine Drehachse schwenkbar miteinander verbunden sind. Das erste Verbindungs- oder Lagerteil weist einen Bolzen oder Zapfen auf und das zweite Verbindungs- oder Lagerteil weist eine den Bolzen umgreifende Hülse auf. Das erste Lagerteil ist somit in das zweite Lagerteil einsteckbar. Zur axialen Fixierung, also zur Verhinderung einer Trennbewegung der beiden Lagerteile in einer Richtung entlang der Drehachse, ist wenigstens ein Eingriffselement vorgesehen, das in ein komplementär geformtes Halteelement eingreift. Das Eingriffselement befindet sich seitens des Bolzens oder der Hülse und das Halteelement entsprechend seitens der Hülse oder des Bolzens. Die beiden Verbindungsteile sind aus zueinander unterschiedlichen Kunststoffen gebildet und werden bevorzugt im sogenannten In-Mold-Assembly- oder Montagespritzguss-Verfahren hergestellt.

Insbesondere bei schweren und/oder ausladenden Außenrückspiegelkonstruktionen kann jedoch die Lageranordnung gemäß der DE 10 2009 013 645 B3 aufgrund der Ausbildung sämtlicher konstruktiver Komponenten in Form von Kunststoffteilen an die Grenzen der mechanischen Belastbarkeit stoßen.

In puncto mechanischer Belastbarkeit sind somit Lageranordnungen mit rohrförmigen Bauelementen aus Metall, die sich in entsprechenden Lageranordnungen drehen oder schwenken lassen, also etwa gemäß der US 5,025,543 A1 oder auch der US 4,166,651 A1 vorteilhaft. Allerdings leiden derartige Lageranordnungen in der Praxis unter anderem an den folgenden Nachteilen:
Das zur Herstellung des rohrförmigen Spiegelarms verwendete Halbzeug, also die Metallrohre, steht in unterschiedlichen Güteklassen und damit unterschiedlichen Oberflächenqualitäten und Maßhaltigkeiten zur Verfügung. Je höher die Güteklasse des Halbzeugs, also des Rohrrohlings ist, umso weniger Nachbearbeitung ist notwendig, um die notwendige Qualität der Passung zwischen dem Rohr des Spiegelarms und der das Rohr aufnehmenden Hülse zu gewährleisten. Allerdings sind Rohre der erforderlichen hohen Güteklasse entsprechend teuer. Ungeachtet davon ist es in der Regel notwendig, das den Spiegelarm bildende Rohr im Zuge der Herstellung des Spiegelarms zu verformen, also abzuwinkeln oder allgemein gesagt zu biegen. Im Zuge derartiger Verformungs- oder Biegevorgänge können die Oberflächen von Rohren auch höherer Güteklassen durch Werkzeugspuren, Halteriefen, Durchmesserveränderungen etc. derart verschlechtert werden, dass nach dem erfolgten Biegevorgang eine nochmalige Oberflächenbearbeitung oder sonstige Anpassung notwendig wird.

Selbst höherwertige Rohre, welche entsprechend teuer sind, sind daher kein Garant für eine problemlosere Fertigung und Rohre geringerer Güteklasse benötigen sowieso in der Regel eine Nachbearbeitung zumindest im Bereich der späteren Passfläche zwischen Rohr und Aufnahmehülse.

Die höhere mechanische Stabilität muss somit mit höheren Herstellungskosten erkauft werden.

Aufgabe der vorliegenden Erfindung ist es angesichts der Probleme aus dem Stand der Technik, eine Lageranordnung der in Frage stehenden Art so auszugestalten, dass preiswerte Herstellung mit hoher mechanischer Stabilität auch bei Verwendung von Halbzeug geringerer Qualität erzielbar ist.

Zur Lösung dieser Aufgabe schlägt die vorliegende Erfindung eine Lageranordnung zur schwenkbaren Lagerung wenigstens eines indirekten Sichtsystems an einem Kraftfahrzeug, insbesondere einem Nutzfahrzeug vor, mit einem ersten Lagerteil und einem zweiten Lagerteil, welche um eine Drehachse schwenkbar miteinander verbunden sind, wobei das erste Lagerteil an einem Tragarm mit wenigstens einem Anbindungsbereich für das indirekte Sichtsystem angeordnet ist; und das zweite Lagerteil an dem Kraftfahrzeug festlegbar ist und das erste Lagerteil zumindest abschnittsweise umgreift. Das erste Lagerteil weist hierbei eine Mantelfläche auf, wobei das zweite Lagerteil diese Mantelfläche zumindest abschnittsweise umgreift. Weiterhin ist das erste Lagerteil von einem Metallzapfen gebildet, welcher in drehfester Verbindung mit dem Tragarm ist und der die Mantelfläche aufweist, wobei die Mantelfläche mit einer hierauf drehfest angebrachten Ummantelung aus Kunststoff versehen ist.

Dadurch, dass das erste Lagerteil aus einem Metallzapfen gebildet ist, hat die erfindungsgemäße Lageranordnung die erforderliche mechanische Stabilität, um auch schwere und/oder weit ausladende indirekte Sichtsysteme, also z.B. Rückspiegel sicher, langlebig und möglichst vibrationsarm lagern zu können. Durch die drehfeste Verbindung mit dem Tragarm erfolgt ein direkter Kraftfluss oder eine direkte Kräfteeinleitung von dem Tragarm in den stabilen Metallzapfen. Durch das weitere Merkmal, dass der das erste Lagerteil bildende Metallzapfen kunststoffummantelt ist, wird erreicht, dass zur Herstellung des Metallzapfens auch Halbzeuge geringerer Güte verwendet werden kann. Etwaige Oberflächenungenauigkeiten, Oberflächenunregelmäßigkeiten in Form von Werkzeugspuren oder dergleichen werden durch die Kunststoffummantelung ausgeglichen oder egalisiert, sodass stets ein Lagerteil mit korrekten Abmessungen, korrekter Oberflächengüte und hoher Passgenauigkeit erhaltbar ist. Werden zur Herstellung des Metallzapfens Halbzeuge einer höheren Güteklasse verwendet, bei denen Oberflächenirregularitäten aufgrund der Herstellung des Halbzeugs nicht vorhanden sind, können gleichwohl Bearbeitungsspuren aufgrund einer Nachbearbeitung des Halbzeugs im Zuge der Fertigung des Tragarms (Werkzeugspuren oder dergleichen) durch die Kunststoffummantelung verdeckt, ausgeglichen und egalisiert werden.

In der Summe ergibt sich durch die Ausbildung des ersten Lagerteils als kunststoffummantelten Metallzapfen, der in drehfester Verbindung mit dem Tragarm ist, eine Lageranordnung, welche stabil, langlebig, alle in der Praxis auftretende Anforderungen erfüllend und preiswert herstellbar ist.

Gemäß einer bevorzugten Ausgestaltungsform ist das erste Lagerteil in Form eines Zylinders ausgebildet, der eine bezüglich der Drehachse rotationssymmetrische Mantelfläche aufweist, wobei das zweite Lagerteil die Mantelfläche des ersten Lagerteils zumindest abschnittsweise umgreift. Dies stellt eine fertigungstechnisch wenig aufwendige, in der Praxis dennoch zuverlässige und langlebige Ausgestaltung dar. Im Rahmen der vorliegenden Erfindung sind gleichwohl hiervon abweichende Konstruktionen insbesondere des ersten Lagerteils möglich, die dann entsprechende Ausgestaltungen des zweiten Lagerteils bedingen. So kann anstelle der Zylinderform mit rotationssymmetrischer Mantelfläche das erste Lagerteil auch eine Konus- oder Kegelstumpfform haben. Weiterhin kann sich von der Mantelfläche des ersten Lagerteils wenigstens eine Leiste oder ein Vorsprung erstrecken, die oder der entlang der Mantelfläche verläuft, so dass ein Linienkontakt zwischen erstem und zweitem Lagerteil entlang des Vorsprungs vorliegt.

Gemäß einer weiteren bevorzugten Ausgestaltungsform ist der Metallzapfen hohl, d.h. als ein Metallrohr ausgebildet. Dies ist vorteilhaft mit Blick auf die Kosten, Materialersparnis, Gewichtsersparnis, leichtere Verformbarkeit, insbesondere Biegbarkeit und die Möglichkeit, im Inneren des Metallrohrs Kabel oder andere Leitungen für Zusatzfunktionen seitens des indirekten Sichtsystems (Versorgungs- und Signalleitungen für z.B. Kameras oder Lichtemitter, Spiegelheizung, Fahrtrichtungsanzeiger im Spiegelkopf, motorische Kamera- oder Spiegelverstellung etc.) zu verlegen.

Das Metallrohr kann gemäß einer Ausgestaltungsform ein Rohrstummel sein, der sich axial über die Lageranordnung hinaus in einen einem der beiden Lagerteile benachbarten Abschnitt des Tragarms hinein erstreckt. Das Metallrohr des ersten Lagerteils verläuft somit im Wesentlichen nur in dem besonders beanspruchten Abschnitt, wo erstes Lagerteil und zweites Lagerteil ineinander geführt sind. Hierdurch ergibt sich eine Gewichtsersparnis der gesamten Rückspiegelanordnung, da das Metallrohr sich nicht unnötig weit in den Tragarm erstreckt, sondern nur axial über die Lageranordnung hinaus in einen dort benachbarten Abschnitt des Tragarms, um ausreichend axiale Länge zur Verfügung zu stellen, damit die drehfeste Verbindung mit dem Tragarm herstellbar ist.

In einer anderen Ausgestaltungsform kann das Metallrohr ein Rohr sein, das sich über die Lageranordnung hinaus im Wesentlichen über die gesamte Länge des Tragarms erstreckt. Diese Ausgestaltungsform ist insbesondere dann zu bevorzugen, wenn besonders hohe Kräfte am Tragarm zu erwarten sind, also der Tragarm durch das in ihm verlaufende Rohr eine Verstärkung erfahren soll. Ein Teil oder Längenabschnitt des Rohrs bildet somit das erste Lagerteil, das im zweiten Lagerteil aufgenommen ist und der verbleibende Abschnitt des Rohrs verläuft im Wesentlichen über die gesamte Länge des Tragarms. Die drehfeste Verbindung mit dem Tragarm ist somit über die einteilige Ausgestaltung des Rohrs erreicht.

Das Material für die Kunststoffummantelung des Metallzapfens kann bevorzugt gleich dem Material des Tragarms sein, wenn dieser Tragarm aus optischen, ästhetischen oder fertigungstechnischen Gründen aus einem Kunststoff ist. Bei dieser Ausgestaltungsform ergibt sich insbesondere dann, wenn das Material der Kunststoffummantelung ein Thermoplast ist, der Vorteil, dass der Metallzapfen im Zug der Herstellung des Tragarms in das dortige Material mit eingegossen und entlang zumindest eines Teilbereichs seiner Mantelfläche mit demselben Material ummantelt wird. Es kann somit in einem Arbeitsgang der Metallzapfen bzw. das Metallrohr drehfest mit dem Tragarm verbunden werden bzw. im Wesentlichen über die gesamte Längenerstreckung hiervon eingebettet werden und die Kunststoffummantelung des Metallzapfens zur Ausbildung des ersten Lagerteils ausgebildet werden. Anstelle eines Thermoplasten können auch andere Kunststoffe oder Werkstoffe allgemein verwendet werden, die dann gegebenenfalls ein abgewandeltes Herstellungsverfahren bei der Ummantelung des Zapfens bzw. Einbettung des Tragarms oder Tragarmabschnitts bedingen, da sie einem thermoplastischen Be- und Verarbeitungsschritt nicht zugänglich sind, also z.B. glas- oder kohlefaserverstärkte Kunststoffe.

Bevorzugt umgreift das zweite Lagerteil den Zapfen des ersten Lagerteils an zwei axial voneinander beabstandeten Lagerungspositionen, wobei die eine Lagerungsposition im Bereich des Austritts des Zapfens aus der Lageranordnung liegt und die andere Lagerungsposition im Bereich des dem Tragarm abgewandten Endabschnitts des Zapfens liegt. Hierdurch erfährt der Zapfen des ersten Lagerteils eine Lagerung oder Führung an zwei konstruktionstechnisch maximal voneinander beabstandeten Positionen und damit eine besonders gute Abstützung.

Darüber hinaus ergibt sich hierdurch die Möglichkeit, zwischen den beiden Lagerungspositionen eine Federvorrichtung anzuordnen, welche den Zapfen axial in eine Richtung in die Lageranordnung hinein vorspannt. Durch diese Federvorrichtung, welche den Zapfen in die Lageranordnung vorspannt, ergibt sich eine bessere Vibrationsbeständigkeit der gesamten Lageranordnung. Darüber hinaus kann bevorzugt diese axiale Vorspannung des Zapfens auf wenigstens eine Verrastungs- und/oder Friktionsvorrichtung für die Schwenkbewegung zwischen den beiden Lagerteilen herangezogen werden.

Das indirekte Sichtsystem ist in einer Ausgestaltungsform der vorliegenden Erfindung wenigstens ein Rückspiegel, insbesondere Außenrückspiegel. Unter "wenigstens ein" sei hierbei verstanden, dass das indirekte Sichtsystem auch als ein Spiegelkopf verstanden werden kann, welches zwei oder mehr individuelle Spiegel lagert.

Gegenstand der vorliegenden Erfindung ist weiterhin ein indirektes Sichtsystem, insbesondere (jedoch nicht ausschließlich) in Form eines Außenrückspiegel für ein Kraftfahrzeug und hier insbesondere ein Nutzfahrzeug mit wenigstens einer erfindungsgemäßen Lageranordnung.

Weitere Einzelheiten, Aspekte und Vorteile der vorliegenden Erfindung ergeben sich besser aus der nachfolgenden Beschreibung von Ausführungsformen bzw. Modifikationen anhand der Zeichnung.

Es zeigt:
Fig. 1 eine vereinfachte Schnittdarstellung durch eine Ausführungsform einer erfindungsgemäßen Lageranordnung;
Fig. 2 eine Fig. 1 entsprechende Darstellung einer Abwandlung der Lageranordnung von Fig. 1;
Fig. 3 und 4 Schnittansichten von Lageranordnungen mit der Lageranordnung gemäß Fig. 1, sowie Abwandlungen von hieran angeordneten Tragarmen;
Fig. 5 eine Ansicht auf eine Lageranordnung in doppelter Ausführung; und
Fig. 6 eine Ansicht auf die Lageranordnung von Fig. 3 mit einem hieran angeordneten indirekten Sichtsystem in Form eines Rückspiegels.

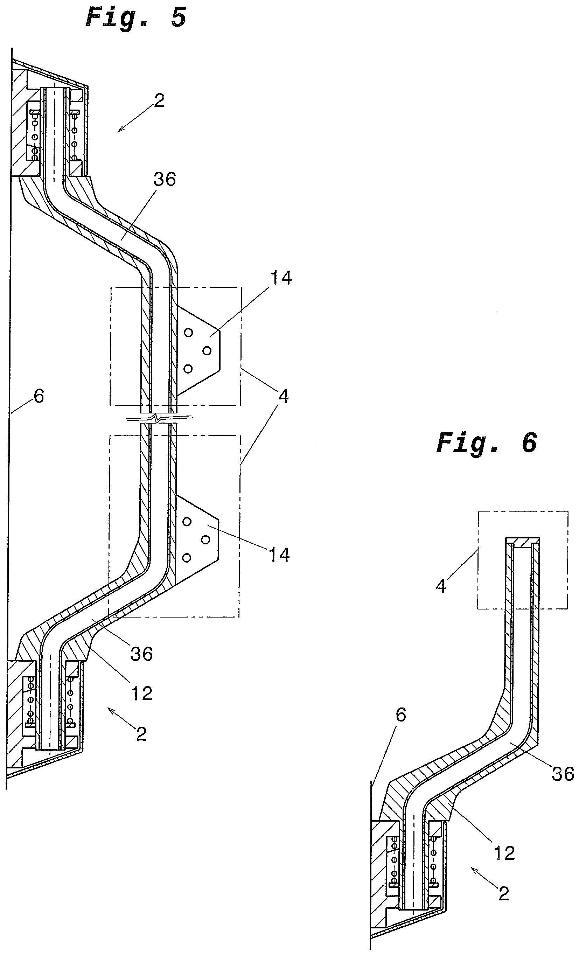

Eine in den Figuren insgesamt mit 2 bezeichnete Lageranordnung gemäß der vorliegenden Erfindung dient zur schwenkbaren Lagerung eines allgemein als "indirektes Sichtsystem" bezeichneten Rückspiegels 4 (Fig. 5 und 6), insbesondere eines Außenrückspiegels an einem Kraftfahrzeug bzw. einem Karosserieteil 6 dieses Kraftfahrzeugs. Das "indirekte Sichtsystem" kann auch eine andere technische Umsetzung haben, z.B. in Form einer Kamera oder dergleichen. Die nachfolgende Beschreibung fokussiert auf die Ausgestaltung des indirekten Sichtsystems als Rückspiegel. Andere Ausgestaltungen sind als äquivalent zu sehen.

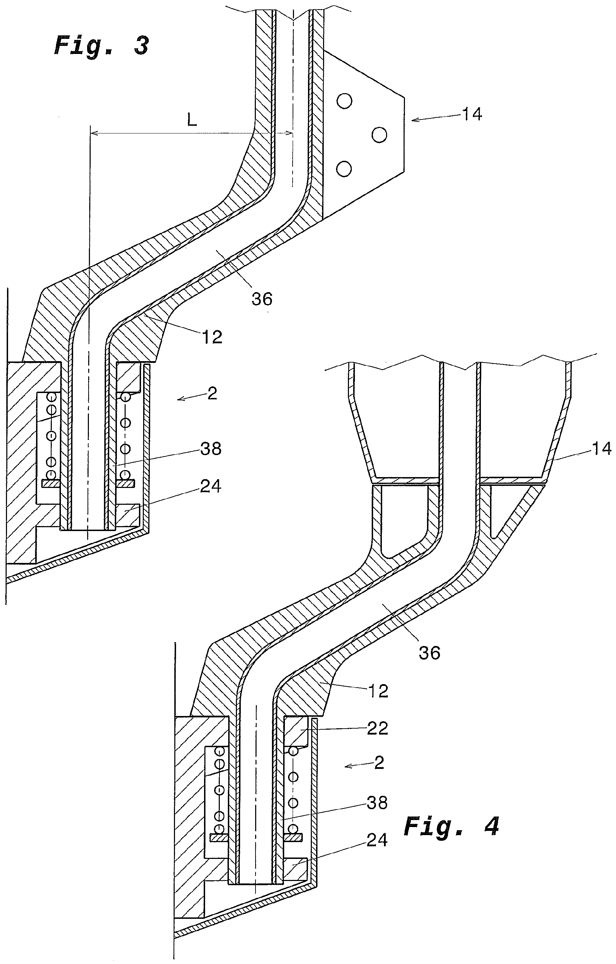

Die Lageranordnung 2 umfasst im Wesentlichen ein erstes Lagerteil 8 und ein zweites Lagerteil 10, welche um eine Dreh- oder Schwenkachse A schwenkbar miteinander verbunden sind. Das erste Lagerteil 8 ist einem allgemein als Tragarm bezeichenbaren Spiegelarm 12 zugeordnet, wobei der Spiegelarm 12 ausweislich der Figuren 3 und 5 wenigstens einen Anbindungsbereich 14 für wenigstens einen Rückspiegel 4 aufweist. Das erste Lagerteil 8 ist in der dargestellten Ausführungsform als gerader Kreiszylinder 16 ausgebildet, der eine bezüglich der Achse A rotationssymmetrische Außenfläche oder Mantelfläche 18 hat. Wie bereits erläutert, kann das erste Lagerteil 8 und/oder dessen Mantelfläche 18 auch eine hiervon abweichende geometrische Form und/oder Oberflächengestaltung haben.

In den Figuren der Zeichnung ist die Lageranordnung 2 bzw. deren zweites Lagerteil 10 direkt oder unmittelbar an dem Kraftfahrzeug bzw. dem Karosserieteil 6 des Kraftfahrzeugs angeordnet. Diese Anordnung kann aber auch mittelbar sein, d.h. unter Zwischenschaltung eines oder mehrerer weiterer Bauteile oder -elemente erfolgen, z.B. eines Auslegers, einer Konsole etc.

Das zweite Lagerteil 10 ist über einen Fuß 20 an dem Karosserieteil 6 festlegbar und weist wenigstens eine die Mantelfläche des ersten Lagerteils 8 zumindest abschnittsweise umgreifende Lagerfläche auf.

Auf die Ausbildung und Anordnung besagter Lagerfläche wird nachfolgend noch näher eingegangen.

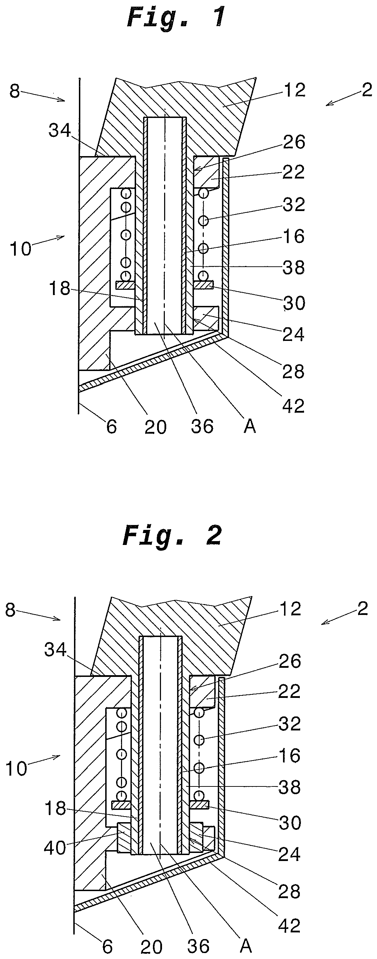

Das zweite Lagerteil 10 kann den in der Zeichnung dargestellten Aufbau aufweisen, d.h. es weist zwei axial entlang der Richtung der Achse A voneinander beabstandete, von dem Fuß 20 nach außen von dem Karosserieteil 6 wegstehende Flansche 22 und 24 auf. Im Bereich des in Fig. 1 oberen, ersten Flansches 22 befindet sich eine erste Lagerungsposition 26 für das erste Lagerteil 8 und im Bereich des in Fig. 1 unteren, zweiten Flansches 24 befindet sich eine zweite Lagerungsposition 28 für das erste Lagerteil 8. Die ersten und zweiten Lagerungspositionen 26 und 28 können in der dargestellten Ausgestaltungsform, bei der das erste Lagerteil als gerader Kreiszylinder ausgebildet ist, axial fluchtende Bohrungen gleichen Durchmessers in den beiden Flanschen 22 und 24 sein. Eine hiervon abweichende geometrische Form des ersten Lagerteils und/oder Ausgestaltung der Mantelfläche 18 bedingt unter Umständen eine andere Form und/oder ein anderes Größenverhältnis und/oder eine andere relative Anordnung der beiden Lagerungspositionen 26 und 28 zueinander.

Die Lagerungspositionen (oder Bohrungen) 26 und 28 nehmen ausweislich der Figuren der Zeichnung das zweite Lagerteil 10 auf. Ein unteres freies Ende des Zylinders 16 des ersten Lagerteils 8 kommt hierbei im Bereich der zweiten Lagerungsposition 28 zu liegen und ein diesem unteren freien Ende gegenüberliegender Endabschnitt des Zylinders 16 ragt über die erste Lagerungsposition 26 hinaus axial über das zweite Lagerteil 10 hinaus vor und erstreckt sich zumindest teilweise in das dortige untere Ende des Spiegelarms 12 hinein und ist mit diesem drehfest verbunden.

Zwischen den beiden Flanschen 22 und 24, genauer gesagt zwischen der Unterseite des oberen Flansches 22 und einem Stützring 30 ist ein Federelement angeordnet, welches im dargestellten Ausführungsbeispiel eine Schraubendruckfeder 32 ist. Der Stützring 30 ist am Außenumfang des Zylinders 16 festgelegt, sodass durch die Feder 32 der Zylinder 16 und damit das erste Lagerteil 8 in allen Figuren der Zeichnung nach unten in das zweite Lagerteil 10 bzw. die Lageranordnung 2 hinein vorgespannt wird. Durch diese Vorspannung aufgrund der Feder 32 liegt eine untere freie Fläche 34 des Spiegelarms 12 unter einer von der Feder 32 abhängigen Druckkraft auf der Oberseite des oberen Flansches 22 auf. Im Bereich der Grenzfläche zwischen der Fläche 34 seitens des Spiegelarms 12 und der Oberseite des oberen Flansches 22 können Verrastungs- und/oder Friktionsmittel vorgesehen werden, die eine Drehung des Spiegelarms 12 relativ zu dem Spiegelfuß 20 beispielsweise in Inkrementen oder Schritten ermöglichen oder welche den Spiegelarm 12 in einer bestimmten Position halten, welche nur bei Aufbringung einer gewissen Kraft auf den Spiegelarm 12 aufhebbar ist oder welche eine einstellbar schwergängige Dreh- oder Schwenkbewegung des Spiegelarms 12 gestatten.

Der Zylinder 16 des ersten Lagerteils 8 ist bevorzugt in Form eines kreiszylindrischen Rohrs 36 ausgebildet, wobei in den Ausgestaltungsformen der Figuren 1 und 2 das Rohr 36 als ein Rohrstummel ausgebildet ist. Das in Fig. 1 obere Ende des Rohrstummels 36 ist drehfest in dem dortigen unteren Endabschnitt des Spiegelarms 12 verankert und ausgehend hiervon erstreckt sich der Rohrstummel 36 bis zu der zweiten Lagerungsposition 28 bzw. der die Lagerungsposition 28 bildenden Bohrung in dem unteren Flansch 24 des zweiten Lagerteils 10 und - ausweislich der Zeichnung - gegebenenfalls auch noch (mehr oder weniger weit oder auch nur geringfügig) über die Lagerungsposition 28 hinaus.

Das Rohr oder der Rohrstummel 36 ist insbesondere aus einem geeigneten Metall.

Die äußere Mantelfläche 18 des Rohrs oder Rohrstummels 36 ist mit einer Ummantelung 38 versehen. Diese Ummantelung 38 ist bevorzugt aus einem geeigneten Kunststoff gefertigt, insbesondere einem Kunststoff, der thermoplastisch verformbar ist, ausreichend hohe Beständigkeit gegenüber jeglichen in der Praxis auftretenden Belastungen oder Einflüssen hat und in der Lage ist, in den Bohrungen der beiden Lagerungspositionen 26 und 28 für eine saubere Führung des Zylinders 16 zu sorgen. Die Ummantelung 38 bzw. der Zylinder 16 mit der Ummantelung 38 kann als eine Art Fügedom verstanden werden, der in die beiden axial fluchtenden Bohrungen oder Lager der Lagerungspositionen 26 und 28 eingesetzt, eingesteckt oder eingepresst ist.

Darüber hinaus erfüllt die Kunststoffummantelung 38 an der Mantelfläche 18 des Zylinders 16 bzw. des Rohrs 36 die Funktion, dass Oberflächenungenauigkeiten und/oder Werkzeugspuren an der Mantelfläche 18 und/oder sonstige Ungenauigkeiten oder Schäden, welche ein sauberes Laufen des Zylinders 16 in den Lagerungspositionen 26 und 28 stören oder beeinträchtigen würden, verfüllt, ausgeglichen, egalisiert oder kaschiert werden. Mit anderen Worten, zur Herstellung des Zylinders 16 bzw. des Rohrs oder Rohrstummels 36 kann sowohl auf Halbzeug mit geringerer Güteklasse zurückgegriffen werden als auch praktisch keine Rücksicht auf etwaige Werkzeugspuren oder dergleichen genommen werden, welche die Mantelfläche 18 verformen oder beschädigen würden, da derartige Verformungen oder Beschädigungen von der Ummantelung 38 egalisiert oder ausgeglichen werden.

Weiterhin stellt die Ummantelung 38 einen Korrosionsschutz für das Metall des Zylinders 16 bzw. Rohrstummels 36 dar.

Die Ummantelung 38 kann in einem eigenen Fertigungsschritt auf die Mantelfläche 18 des Zylinders 16 aufgebracht werden, wonach dann der Zylinder 16 drehfest am unteren Ende des Spiegelarms 12 verankert oder befestigt wird.

In dem Ausführungsbeispiel, welche in den Figuren der Zeichnung dargestellt ist, ist die Ummantelung 38 aus dem Material des Spiegelarms 12 gebildet und einteilig hiermit, d.h. der Zylinder 16 wird im Zuge der Ausbildung des Spiegelarms 12 beispielsweise durch einen Formspritzvorgang gleichzeitig und direkt auch von dem Material des Spiegelarms 12 ummantelt. Der Spiegelarm 12 kann somit in einem Arbeitsgang mit dem hieran befestigten oder eingebetteten Rohr 36 ausgebildet werden, wobei darüber hinaus durch die einteilige Ausbildung von Ummantelung 38 und restlichem Material des Spiegelarms 12 der Zylinder 16 mit hoher Zuverlässigkeit drehfest gegenüber dem Spiegelarm 12 festgelegt ist, was insbesondere dann wesentlich ist, wenn der Zylinder 16 lediglich in Form des Rohrstummels ausweislich der Figuren 1 und 2 vorliegt.

Das obere freie Ende des Rohrstummels, welches im Material des Spiegelarms 12 liegt, kann jedoch zusätzlich noch Drehverhinderungsmittel aufweisen, mit welchen eine bessere Anbindung des Materials des Spiegelarms 12 mit der Oberfläche des Rohrstummels erreicht wird, also z.B. eine Rändelung oder dergleichen.

In der Abwandlung gemäß Fig. 2 befindet sich im Bereich der zweiten Lagerungsposition 28 bzw. des dortigen unteren Flansches 24 ein Montagering 40, mit dem der Zusammenbau der Lageranordnung 2 vereinfacht ist.

Die Figuren 3 und 4 zeigen eine Abwandlung der Ausführungsform von Fig. 1, bei der der Zylinder 16 nicht als Rohrstummel ausgebildet ist, sondern das Rohr 36 erstreckt sich ausgehend von der Lageranordnung 2 im Wesentlichen über die gesamte Länge des Spiegelarms 12 hinweg zumindest bis in den Bereich des dortigen wenigstens einen Anbindungsbereichs 14, wobei die Lage und Ausbildung dieses Anbindungsbereichs 14 jeweils von der Anzahl und der Ausgestaltung des jeweiligen Rückspiegels 4 bzw. indirekten Sichtsystems abhängt.

Auch im Fall der Ausgestaltungen der Figuren 3 und 4 kann die Ummantelung 38 entweder separat an dem sich in der Lageranordnung 2 befindlichen Abschnitt des Rohrs 36 bzw. der dortigen Mantelfläche 18 ausgebildet werden oder die Ummantelung 38 ist in einem Zug auf die Mantelfläche 18 bei der Ausbildung des Spiegelarms 12 aufgebracht.

Die Modifikation gemäß Fig. 2 mit dem Montagering 40 kann selbstverständlich auch bei den Figuren 3 oder 4 zur Anwendung gelangen.

Fig. 5 zeigt die Möglichkeit, zwei der erfindungsgemäßen Lageranordnungen 2 an dem Karosserieteil 6 anzuordnen, wobei die beiden Lageranordnungen 2 jeweils einen Endabschnitt eines Rohrs 36 schwenkbeweglich aufnehmen und lagern. Das Rohr 36 weist die in den Figuren 3 bis 6 beispielhaft veranschaulichte Abkröpfung oder Abwinklung auf und trägt an einem Abschnitt zwischen den beiden Lageranordnungen 2 an entsprechenden Anbindungsbereichen 14 einen oder mehrere Rückspiegel 4 bzw. indirekte Sichtsysteme.

Fig. 6 zeigt, wie das Rohr 36 im Wesentlichen die gesamte Länge des Spiegelarms 12 durchsetzen kann.

Das Material für die Umantelung 38 des Zapfens ist bevorzugt gleich dem Material des Spiegel- oder Tragarm 12. Insbesondere dann, wenn das Material der Umantelung ein Thermoplast ist, ergibt sich der Vorteil, dass der Metallzapfen im Zug der Herstellung des Spiegelarms 12 in das dortige Material mit eingegossen und entlang zumindest eines Teilbereichs seiner Mantelfläche mit demselben Material ummantelt wird. Es kann somit in einem Arbeitsgang der Metallzapfen bzw. das Metallrohr drehfest mit dem Spiegelarm 12 verbunden werden bzw. im Wesentlichen über die gesamte Längenerstreckung hiervon eingebettet werden und die Kunststoffummantelung des Metallzapfens zur Ausbildung des ersten Lagerteils 8 ausgebildet werden. Anstelle eines Thermoplasten können auch andere Kunststoffe oder Werkstoffe verwendet werden, die dann gegebenenfalls ein abgewandeltes Herstellungsverfahren bei der Ummantelung des Zapfens bzw. Einbettung des Spiegelarms 12 oder Spiegelarmabschnitts bedingen, da sie einem thermoplastischen Be- und Verarbeitungsschritt nicht zugänglich sind, also z.B. glas- oder kohlefaserverstärkte Kunststoffe.

Die Ausgestaltungsform von Fig. 5 mit zwei Lageranordnungen 2 kann die Ausbildung der Lageranordnung 2 gemäß Fig. 1 verwenden. Alternativ oder zusätzlich kann bei der Ausgestaltungsform von Fig. 5 auch der Montagering 40 gemäß Fig. 2 zur Anwendung gelangen.

In allen Ausführungsformen ist bevorzugt noch eine Abdeckung 42 vorhanden, welche die Lageranordnung 2 bzw. den Bereich des zweiten Lagerteils 10 umgreift. Die Abdeckung 42 dient dem Schutz vor Witterungseinflüssen, der Verbesserung der aerodynamischen Eigenschaften (Verringerung oder Vermeidung von Windgeräuschen) und der Verbesserung des Erscheinungsbildes.

### Bezugszeichenliste

- 2: Lageranordnung
- 4: Rückspiegel
- 6: Karosserieteil
- 8: erstes Lagerteil
- 10: zweites Lagerteil
- 12: Trag- oder Spiegelarm
- 14: Anbindungsbereich
- 16: Zylinder
- 18: Mantelfläche
- 20: Fuß
- 22: Flansch (oben)
- 24: Flansch (unten)
- 26: erste Lagerungsposition/Bohrung
- 28: zweite Lagerungsposition/Bohrung
- 30: Stützring
- 32: Feder
- 34: Fläche
- 36: Rohr
- 38: Ummantelung
- 40: Montagering
- 42: Abdeckung

- A: Drehachse

## Patentansprüche

1. Lageranordnung (2) mit einem Tragarm (12) zur schwenkbaren Lagerung wenigstens eines indirekten Sichtsystems (4) an einem Kraftfahrzeug, insbesondere einem Nutzfahrzeug, mit einem ersten Lagerteil (8) und einem zweiten Lagerteil (10), welche um eine Drehachse (A) schwenkbar miteinander verbunden sind, wobei
das erste Lagerteil (8) am Tragarm (12) mit wenigstens einem Anbindungsbereich (14) für das indirekte Sichtsystem (4) angeordnet ist; und
das zweite Lagerteil (10) an dem Kraftfahrzeug festlegbar ist und das erste Lagerteil (8) zumindest abschnittsweise umgreift; und
das erste Lagerteil (8) eine Mantelfläche (18) aufweist, wobei das zweite Lagerteil (10) diese Mantelfläche (18) zumindest abschnittsweise umgreift;
**dadurch gekennzeichnet, dass**
das erste Lagerteil (8) von einem Metallzapfen gebildet ist, welcher in drehfester Verbindung mit dem Tragarm (12) ist und der die Mantelfläche (18) aufweist, wobei die Mantelfläche (18) mit einer hierauf drehfest angebrachten Ummantelung (38) aus Kunststoff versehen ist.

2. Lageranordnung (2) nach Anspruch 1, **dadurch gekennzeichnet, dass** das erste Lagerteil (8) in Form eines Zylinders (16) ausgebildet ist, der eine bezüglich der Drehachse (A) rotationssymmetrische Mantelfläche (18) aufweist.

3. Lageranordnung (2) nach Anspruch 1 oder 2, **dadurch gekennzeichnet, dass** der Metallzapfen als ein Metallrohr (36) ausgebildet ist.

4. Lageranordnung (2) nach einem der Ansprüche 1 bis 3, **dadurch gekennzeichnet, dass** das Metallrohr (36) ein Rohrstummel ist, der sich axial über die Lageranordnung (2) hinaus in einen einem der Lageranordnung (2) unmittelbar benachbarten Abschnitt des Tragarms (12) hinein erstreckt.

5. Lageranordnung (2) nach einem der Ansprüche 1 bis 3, **dadurch gekennzeichnet, dass** das Metallrohr (36) ein Rohr ist, das sich über die Lageranordnung (2) hinaus im Wesentlichen über die gesamte Länge des Tragarms (12) erstreckt.

6. Lageranordnung (2) nach einem der vorhergehenden Ansprüche, **dadurch gekennzeichnet, dass** das Material der Kunststoffummantelung (38) des Metallrohrs (36) gleich dem Material des Tragarms (12) ist.

7. Lageranordnung (2) nach Anspruch 6, **dadurch gekennzeichnet, dass** dass das Material der Kunststoffummantelung (38) ein Thermoplast ist.

8. Lageranordnung (2) nach Anspruch 7 **dadurch gekennzeichnet, dass** dass das Metallrohr (36) im Zuge der Herstellung des Tragarms (12) in das dortige Material mit eingießbar und entlang zumindest eines Teilbereichs seiner Mantelfläche (28) mit dem selben Material derart ummantelbar ist, dass Kunststoffumantelung (38) und Tragarm (12) einteilig ausgeführt sind.

9. Lageranordnung (2) nach einem der vorhergehenden Ansprüche, **dadurch gekennzeichnet, dass** das zweite Lagerteil (10) den Zapfen des ersten Lagerteils (8) an zwei axial voneinander beabstandeten Lagerungspositionen (26, 28) umgreift, wobei die eine Lagerungsposition (26) im Bereich des Austritts des Zapfens aus der Lageranordnung (2) in den Tragarm (12) hinein liegt und die andere Lagerungsposition (28) im Bereich des dem Tragarm (12) abgewandten Endabschnitts des Zapfens liegt.

10. Lageranordnung (2) nach Anspruch 9, **dadurch gekennzeichnet, dass** in dem Bereich zwischen den beiden Lagerungspositionen (26, 28) eine Federvorrichtung (32) angeordnet ist, welche den Zapfen axial in eine Richtung in die Lageranordnung (2) hinein vorspannt.

11. Lageranordnung (2) nach Anspruch 10, **dadurch gekennzeichnet, dass** die axiale Vorspannung des Zapfens in die Lageranordnung (2) hinein auf wenigstens eine Verrastungs- und/oder Friktionsvorrichtung für die Schwenkbewegung zwischen erstem und zweitem Lagerteil (8, 10) wirkt.

12. Lageranordnung (2) nach einem der vorhergehenden Ansprüche, **dadurch gekennzeichnet, dass** das indirekte Sichtsystem (4) ein Rückspiegel, insbesondere ein Außenrückspiegel ist.

13. Indirektes Sichtsystem (4), insbesondere in Form wenigstens eines Außenrückspiegels für ein Kraftfahrzeug, insbesondere Nutzfahrzeug, mit wenigstens einer Lageranordnung (2) nach zumindest einem der vorhergehenden Ansprüche.

## Claims

1. Bearing arrangement (2) with a support arm (12) for rotatable bearing of at least one indirect sight system (4) on a motor vehicle, in particular a utility vehicle, with a first bearing part (8) and a second bearing part (10), which are rotatably connected to one another through a rotational axis (A), whereby
the first bearing part (8) is arranged on the support arm (12) with at least one area of join (14) for the indirect sight system (4); and
the second bearing part (10) is fixable to the motor vehicle and encompasses the first bearing part (8) at least in sections; and
first bearing part (8) has a lateral surface (18), whereby the second bearing part (10) at least in sections encompasses the lateral surface (18);
**characterised in that**
the first bearing part (8) is made up of a metal spigot, which is connected to the support arm (12) in a torque-proof way and having the lateral surface (18), wherein the lateral surface (18) is provided with a coating (38) made of plastic and fixed in a torque-proof way thereon.

2. Bearing arrangement (2) according to Claim 1, **characterised in that** the first bearing part (8) is in the form of a cylinder (16) that has a rotation-symmetrical lateral surface (18) in relation to the rotational axis (A).

3. Bearing arrangement (2) according to Claim 1 or 2, **characterised in that** the metal spigot is formed as a metal pipe (36).

4. Bearing arrangement (2) according to one of Claims 1 to 3, **characterised in that** the metal pipe (36) is a pipe stub which extends axially beyond the bearing arrangement (2) into a section of the support arm (12) directly neighbouring on the bearing arrangement (2).

5. Bearing arrangement (2) according to one of Claims 1 to 3, **characterised in that** the metal pipe (36) is a pipe which extends beyond the bearing arrangement (2) essentially across the entire length of the support arm (12).

6. Bearing arrangement (2) according to one of the above Claims, **characterised in that** the material of the plastic coating (38) of the metal pipe (36) is the same material as the support arm (12).

7. Bearing arrangement (2) according to Claim 6, **characterised in that** the material of the plastic coating (38) is a thermoplastic.

8. Bearing arrangement (2) according to Claim 7, **characterised in that** the metal pipe (36), in the course of the production of the support arm (12), can be coated in the material there which is pourable and coatable along at least one part area of its coat surface (28) with the same material, so that the plastic coating (38) and the support arm (12) are made as one part.

9. Bearing arrangement (2) according to one of the above Claims, **characterised in that** the second bearing part (10) encompasses the spigot of the first bearing part (8) at two bearing positions (26, 28) spaced axially from one another, whereby the one bearing position (26) lies in the area of the outlet of the spigot from the bearing arrangement (2) in the support arm (12) and the other bearing position (28) lies in the area of the end section of the spigot turned away from the support arm (12).

10. Bearing arrangement (2) according to Claim 9, **characterised in that** in the area between the two bearing positions (26, 28) a spring system (32) is arranged which pre-tensions the spigot axially in one direction in the bearing arrangement (2).

11. Bearing arrangement (2) according to Claim 10, **characterised in that** the axial pre-tensioning of the spigot in the bearing arrangement (2) effects at least one catch and/or friction mechanism for the rotational movement between the first and second bearing part (8, 10).

12. Bearing arrangement (2) according to one of the above Claims, **characterised in that** the indirect sight system (4) is a rear-view mirror, in particular an external rear-view mirror.

13. Indirect sight system (4), in particular in the form of at least one external rear-view mirror for a motor vehicle, in particular a utility vehicle, with at least one bearing arrangement (2) according to at least one of the above Claims.

## Revendications

1. Ensemble support (2) comprenant un bras porteur (12) pour le support pivotant d'au moins un système de vision indirect (4) sur un véhicule automobile, en particulier un véhicule utilitaire, comprenant une première partie de support (8) et une deuxième partie de support (10), lesquelles sont reliées l'une à l'autre de manière à pouvoir pivoter autour d'un axe de rotation (A), dans lequel
la première partie de support (8) est agencée sur le bras porteur (12) au moyen d'au moins une zone de raccordement (14) pour le système de vision indirect (4) ; et
la deuxième partie de support (10) peut être fixée sur le véhicule automobile et entoure au moins en partie la première partie de support (8) ; et
la première partie de support (8) comprend une surface extérieure (18), dans lequel la deuxième partie de support (10) entoure au moins en partie cette surface extérieure (18) ;
**caractérisé en ce que**
la première partie de support (8) est formée par un tourillon métallique, lequel est relié solidaire en rotation au bras porteur (12) et présente la surface extérieure (18), dans lequel la surface extérieure (18) est pourvue d'une gaine (38) en matière plastique appliquée solidaire en rotation sur celle-ci.

2. Ensemble support (2) selon la revendication 1, **caractérisé en ce que** la première partie de support (8) est réalisée sous la forme d'un cylindre (16), qui présente une surface extérieure (18) à symétrie de rotation par rapport à l'axe de rotation (A).

3. Ensemble support (2) selon la revendication 1 ou 2, **caractérisé en ce que** le tourillon métallique est réalisé sous la forme d'un tube métallique (36).

4. Ensemble support (2) selon l'une quelconque des revendications 1 à 3, **caractérisé en ce que** le tube métallique (36) est un moignon de tube qui s'étend axialement au-delà de l'ensemble support (2) à l'intérieur d'une section du bras porteur (12) directement voisine de l'ensemble support (2).

5. Ensemble support (2) selon l'une quelconque des revendications 1 à 3, **caractérisé en ce que** le tube métallique (36) est un tube qui s'étend au-delà de l'ensemble support (2) sensiblement sur toute la longueur du bras porteur (12).

6. Ensemble support (2) selon l'une quelconque des revendications précédentes, **caractérisé en ce que** le matériau de la gaine en matière plastique (38) du tube métallique (36) est identique au matériau du bras porteur (12).

7. Ensemble support (2) selon la revendication 6, **caractérisé en ce que** le matériau de la gaine en matière plastique (38) est un thermoplastique.

8. Ensemble support (2) selon la revendication 7, **caractérisé en ce que** le tube métallique (36), au cours de la fabrication du bras porteur (12), peut être coulé dans le matériau situé là et peut être gainé de ce même matériau le long d'au moins une partie de sa surface extérieure (28), de telle manière que la gaine en matière plastique (38) et le bras porteur (12) soient réalisés d'une seule pièce.

9. Ensemble support (2) selon l'une quelconque des revendications précédentes, **caractérisé en ce que** la deuxième partie de support (10) entoure le tourillon de la première partie de support (8) en deux positions de support (26, 28) espacées axialement l'une de l'autre, dans lequel l'une des positions de support (26) se situe dans la zone de la sortie du tourillon de l'ensemble support (2) à l'intérieur du bras porteur (12) et l'autre position de support (28) se situe dans la zone de la section d'extrémité du tourillon opposée au bras porteur (12).

10. Ensemble support (2) selon la revendication 9, **caractérisé en ce qu'**un dispositif à ressort (32), lequel précontraint le tourillon axialement dans une direction à l'intérieur de l'ensemble support (2), est agencé dans la zone située entre les deux positions de support (26, 28).

11. Ensemble support (2) selon la revendication 10, **caractérisé en ce que** la précontrainte axiale du tourillon à l'intérieur de l'ensemble support (2) agit sur au moins un dispositif d'encliquetage et/ou de friction pour le mouvement pivotant entre la première et la deuxième partie de support (8, 10).

12. Ensemble support (2) selon l'une quelconque des revendications précédentes, **caractérisé en ce que** le système de vision indirect (4) est un rétroviseur, en particulier un rétroviseur extérieur.

13. Système de vision indirect (4), se présentant en particulier sous forme d'au moins un rétroviseur extérieur pour un véhicule automobile, en particulier un véhicule utilitaire, comprenant au moins un ensemble support (2) selon au moins l'une des revendications précédentes.
